(19) Europäisches Patentamt / European Patent Office / Office européen des brevets

(11) **EP 4 074 527 A1**

(12) **EUROPEAN PATENT APPLICATION**

(43) Date of publication:
**19.10.2022 Bulletin 2022/42**

(51) International Patent Classification (IPC):
***B60H 1/00*** (2006.01)

(21) Application number: **21167769.5**

(52) Cooperative Patent Classification (CPC):
**B60H 1/00857; B60H 1/00578**

(22) Date of filing: **12.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Service Limited Liability Company Togliatti 445000 (RU)**

(72) Inventors:
• **VEDERNIKOV, Dmitry 445000 Togliatti (RU)**
• **LYALIN, Vladimir 445000 Togliatti (RU)**

(74) Representative: **Valeo Systèmes Thermiques Service Propriété Intellectuelle ZA l'Agiot, 8 rue Louis Lormand CS 80517 La Verrière 78322 Le Mesnil-Saint-Denis Cedex (FR)**

(54) **ACTUATION SYSTEM**

(57) An actuation system for actuating at least one flap of a HVAC module (300), the actuation system including an actuating cable (10) and a cam (20) wherein at least a portion of the actuating cable (10) is securely held within a sheath (10a) and is guided by and moved through a cable guide (11) to exert pulling force, the cam (20) is mounted on a housing (310) and is actuated by the pulling force exerted by the actuating cable (10) connected thereto at a fixation point (22), the cam (20) rotates and converts motion of the actuating cable (10) into angular movement of a flap interacting with the cam (20) and the cam (20) includes an auxiliary guiding pin (24) disposed thereon between the cable guide (11) and the fixation point (22) and above the actuating cable (10).

FIG. 2

EP 4 074 527 A1

**Description**

The present invention relates to an actuation system, more particularly, the present invention relates to an actuation system for actuating at least one flap of a vehicle HVAC module.

A HVAC module generally includes a HVAC housing that defines an enclosure to receive a blower and at least one heat exchanger such as for example, an evaporator and a heater for conditioning the air. The housing further includes an inlet for ingress of air therein, a plurality of vents for egress of conditioned air therefrom and flaps. The blower generates pressure difference across the evaporator and the heater to facilitate flow of air received inside the housing through at least one of evaporator and the heater. The multiple flaps disposed around the heater and the evaporator operate in conjunction to regulate flow of air to the evaporator, the heater and the vents to regulate the flow of air processed/ conditioned by at least one of the evaporator and the heater, to deliver different combinations of air flow temperature at the different vents/outlets.

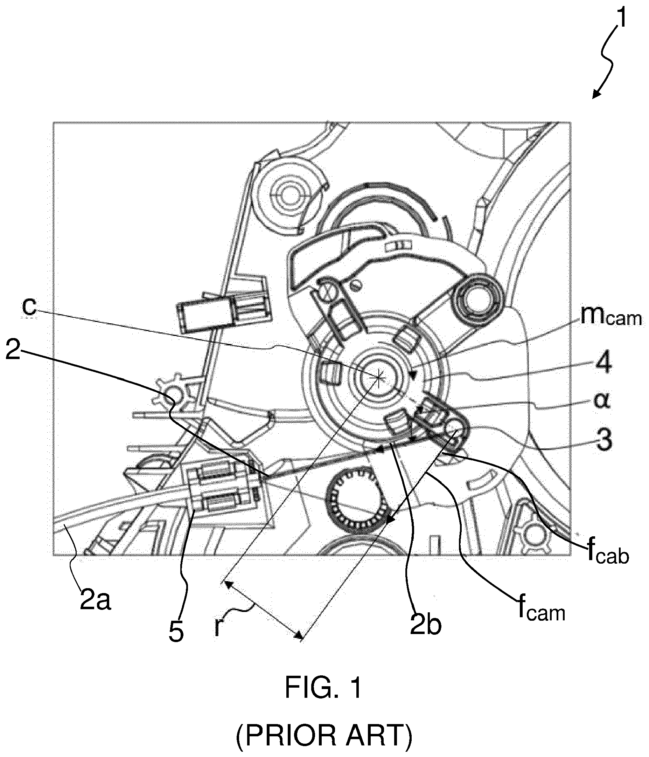

The flaps are actuated by a conventional actuation system that includes control panel knob, that is generally a rotary knob and is hereinafter referred to as "rotary knob" disposed on a control panel of the vehicle to change mode of operation of the flaps, for example to switch to foot mode. FIG. 1 illustrates a schematic representation of a portion of a conventional actuation system 1. The conventional actuation system 1 includes an actuating cable 2, a cam 4, a cable guide 5 and a fixation point 3 formed on the cam 4. At least a portion of the actuating cable 2 is securely held within a sheath 2a that is guided by and moved through the cable guide 5 to exert pulling force by the actuating cable 2, whereas a remaining portion 2b of the actuating cable is without the sheath 2a. The actuating cable 2 is connected to the cam 4 through the engaging element, particularly, the fixation point 3. The actuating cable 2 is functionally coupled to the rotary knob disposed downstream of the cable guide 5 in direction of movement of the actuating cable 2 and exerts pulling force on the cam 4 to cause rotation thereof as the rotary knob is actuated. The cam 4 converts the linear motion of the actuating cable 2 into angular motion of at least one of the flaps of the HVAC module functionally coupled to the cam 4.

In case of the conventional actuating system 1 for controlling the operation of the flap, more torque is required for actuating the rotary knob due to high tension in the actuating cable (high fcab), thereby causing inconvenience to user. Further, due to high tension in the actuating cable, the actuating cable is prone to mechanical failure, thereby causing reliability / durability issues. Further, due to more torque required for actuating the rotary knob, the rotary knob is also prone to mechanical failure, thereby causing reliability / durability issues.

Accordingly, there is a need for an actuating system that reduces tension in the actuating cable and obviates the problems faced due to high tension in the actuating cable. More specifically, there is need for an actuating system that reduces the tension in the actuating cable and accordingly reduces the operating torque of a rotary knob configured on a control panel and used to control the flaps of the HVAC module through the actuating cable and cam. Further, there is a need for an actuating system that is simple in construction and reduces chances of mechanical failure of the actuating cable, thereby improving durability and service life of the actuating system. Furthermore, there is a need for an actuating system that exhibits improved performance and faster response time. Further, there is a need for an improved actuation system that can be configured by retrofitting fewer elements in the conventional actuating system without requiring many modifications.

An object of the present invention is to provide an actuating system that reduces tension in the actuating cable and obviates the problems arising due to high tension in the actuating cable.

Another object of the present invention is to provide an actuating system that reduces the tension in the actuating cable, thereby reducing the operating torque of a rotary knob used to control the flaps of the HVAC module through the actuating cable.

Still another object of the present invention is to provide an actuating system that is simple in construction and reduces chances of mechanical failure of the actuating cable and the rotary knob, thereby improving durability and service life of the actuating system.

Yet another object of the present invention is to provide an actuating system that can be configured by retrofitting fewer elements on the conventional actuating system without requiring many modifications.

Still another object of the present invention is to provide an actuating system that exhibits improved performance and faster response time.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

An actuation system for actuating at least one flap of a HVAC module is disclosed in accordance with an embodiment of the present invention. The actuation system includes an actuating cable and a cam. At least a portion of the actuating cable is securely held within a sheath that is guided by and moved through a cable guide to exert pulling force by the actuating cable. The cam is mounted on a housing and is actuated by the pulling force exerted by the actuating cable connected thereto at a fixation point. The cam rotates and converts motion of the actuating cable into angular movement of at least one flap interacting with the cam. The cam includes an auxiliary guiding pin disposed thereon between the cable guide and the fixation point and above the actuating cable.

Generally, the actuating cable is functionally coupled to a rotary knob disposed on a vehicle control panel and downstream of the cable guide in direction of movement of the actuating cable, the actuating cable exerts pulling force upon actuation of the rotary knob.

Particularly, the remaining section of the actuating cable coming in contact with the auxiliary guiding pin is without the sheath.

More specifically, the actuating cable is of a single wire.

Generally, the fixation point is a ball and socket arrangement.

Particularly, the fixation point is disposed proximal to a periphery of the cam.

Generally, the auxiliary guiding pin is integrally formed with the cam by moulding process.

Alternatively, the auxiliary guiding pin is separate from the cam and mounted thereon.

Preferably, the auxiliary guiding pin is of circular cross section.

Further, the auxiliary guiding pin is of uniform cross section along length thereof.

Alternatively, the auxiliary guiding pin is of nonuniform cross section along length thereof.

In one embodiment, the auxiliary guiding pin is tapered radially inwards from a fixed end to a free end thereof.

In accordance with another embodiment, the auxiliary guiding pin is tapered radially outwards from the fixed end to the free end.

More specifically, the auxiliary guiding pin is arranged on the cam between the actuating cable and the axis of rotation "C" of the cam.

Generally, height of the auxiliary guiding pin is at least 5mm higher then height of the actuating cable with respect to the cam.

Further, mean diameter of the auxiliary guiding pin is at least 4 times the diameter of the actuating cable.

Preferably, the auxiliary guiding pin guides the actuating cable to increase a pulling angle and limit contact and time of contact between the actuating cable and the guiding pin at the instance when the flap is being actuated by the cam.

Specifically, the actuating cable is connected to the rotary knob via an actuating arm A, the actuating arm A, being connected to the rotary knob and rotates therewith and the actuating cable is connected to the actuating arm A through a fixing element.

Also is disclosed a HVAC unit in accordance with an embodiment of the present invention, the HVAC unit includes at least one flap that is actuated by the actuation system as disclosed above.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:

FIG. 1 illustrates a schematic representation of at least a portion of a convention actuation system;

FIG. 2 illustrates a schematic representation of at least a portion of an actuation system in accordance with an embodiment of the present invention mounted on a housing of a HVAC module, wherein an auxiliary guiding pin is depicted interacting with an actuating cable;

FIG. 3 illustrates a schematic representation of at least a portion of the actuation system of FIG. 2, wherein the auxiliary guiding pin is depicted about to interact with the actuating cable, also is depicted an enlarged view of a fixation point or fixation arrangement, wherein cable is shown disengaged from the cam;

FIG. 4 illustrates a schematic representation depicting another view of at least a portion of the actuation system of FIG. 2;

FIG. 5 illustrates a schematic representation of the actuating cable of the actuation system of FIG. 2;

FIG. 6 illustrates a schematic representation of the cam of the actuation system of FIG. 2;

FIG. 7 illustrates a schematic representation of the housing of the HVAC module;

FIG. 8a illustrates an isometric front view of a control panel configured with a rotary knob functionally coupled to the actuation system of FIG. 2 for actuation thereof; and

FIG. 8b illustrates a rear view of the control panel of FIG. 8a.

Although, the present invention is explained in the forthcoming description and the accompanying drawings with example of an actuation system for actuating at least one flap of a vehicle HVAC module. However, the actuating system of the present invention is also applicable for any cable actuated actuation system used in vehicular and non-vehicular environments. More specifically, the actuating system of the present invention is applicable for any cable actuated actuation system, wherein it is required to reduce the tension in the actuating cable to reduce the operating torque of a control panel knob that is generally a rotary knob configured on a control panel for controlling the movement of the flaps.

The actuating system of the present invention is applicable for any cable actuated actuation system, wherein it is required to further reduce the chances of mechanical failure of the actuating cable and improve durability and service life of the actuating system.

FIG. 1 illustrates a schematic representation of at least a portion of a convention actuation system 1. Based on the below equations and analysis, it is understood that the force $f_{cab}$ acting on the actuating cable 2, particularly, the tension $f_{cab}$ in the actuating cable 2 is inversely proportional to a pulling angle $\alpha$ subtended by the actuating cable 2 with respect to an imaginary line connecting an axis of rotation "c" of the cam 4 and the fixation point 3. Referring to FIG.1 and the below equations,

$$f_{cam} = m_{cam} * R$$

$$f_{cab} = f_{cam} / Sine\ (\alpha)$$

$$\alpha \nearrow \Rightarrow f_{cab} \searrow$$

where, $f_{cam}$ is the force acting on the cam,
$f_{cab}$ is the force acting on the cable,
$\alpha$ is the pulling angle subtended by the actuating cable, in case of the conventional actuating system without guiding pin.

From the above it is understood that the force acting on the cable $f_{cab}$ is more if the pulling angle $\alpha$ is small. In case of the conventional actuation system 1, the actuating cable 2 is subjected to high tension due to angle of pull $\alpha$ being limited, particularly, at the instance when the cam 4 is being actuated by the actuation cable 2 to move the flap of a HVAC module. The high tension in the actuating cable 2 causes the operating torque of a rotary knob used to control the flaps of the HVAC module through the actuating cable 2 to increase, causing inconvenience to the user. Further, high tension in the actuating cable 2 renders the actuating cable 2 and the rotary knob 12 prone to frequent mechanical failures, thereby causing reliability / durability issues and increasing the maintenance expenses.

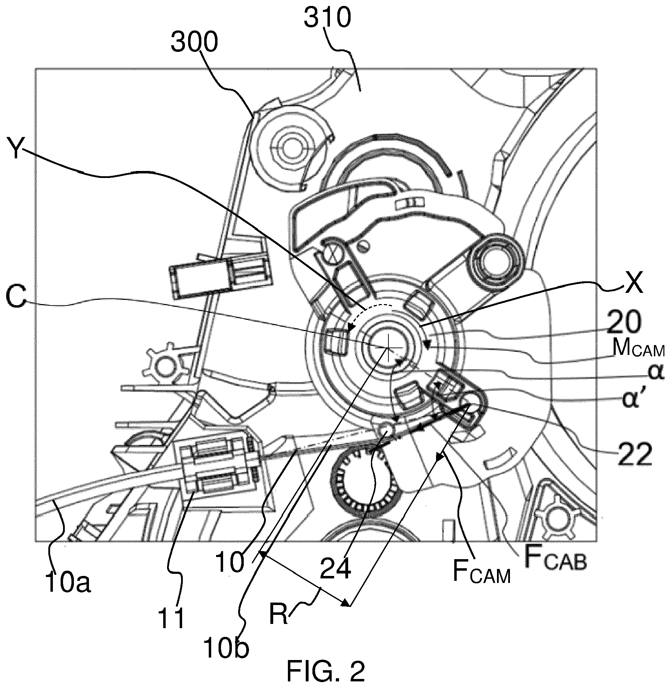

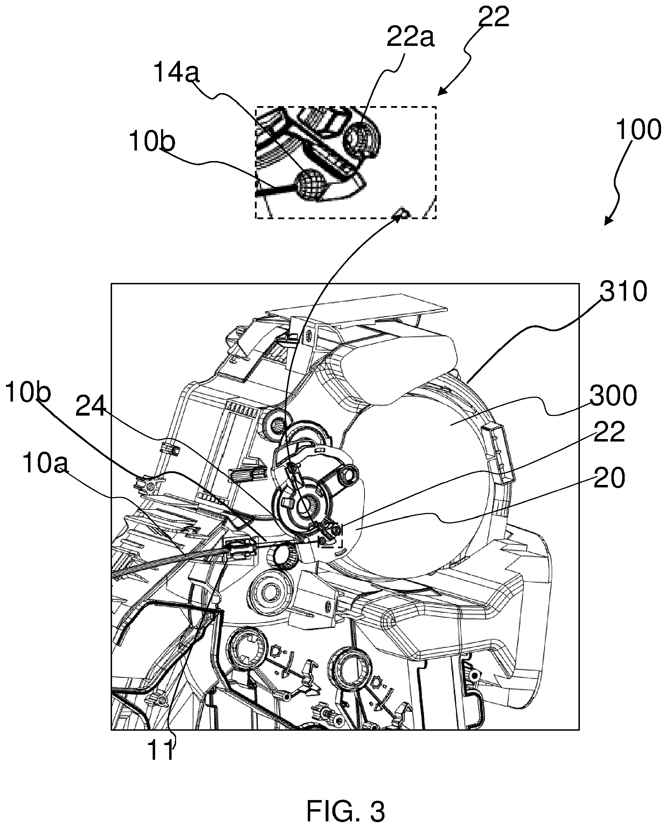

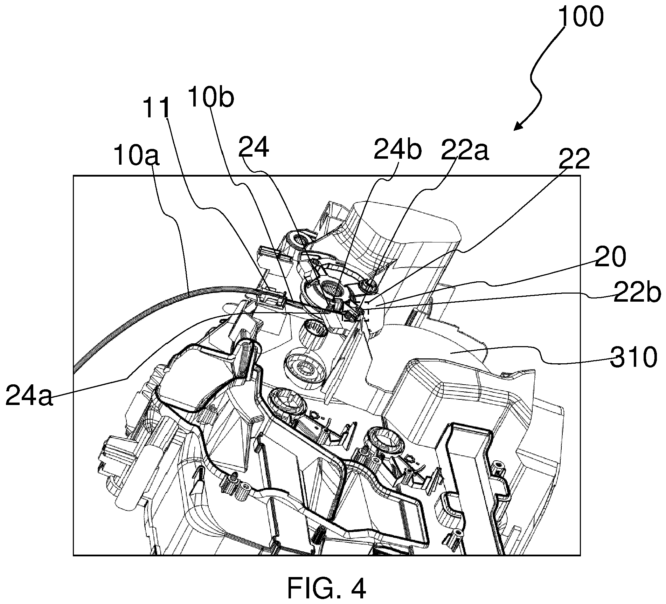

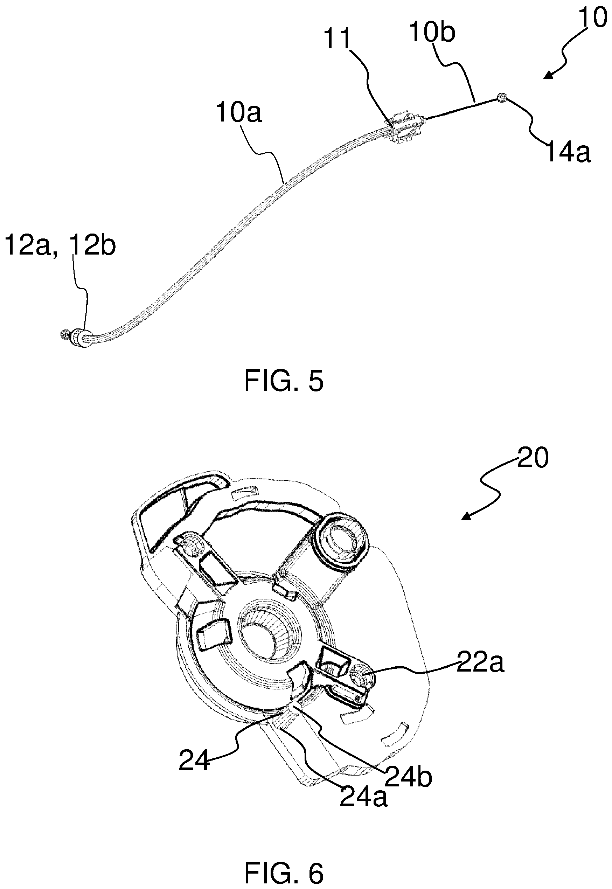

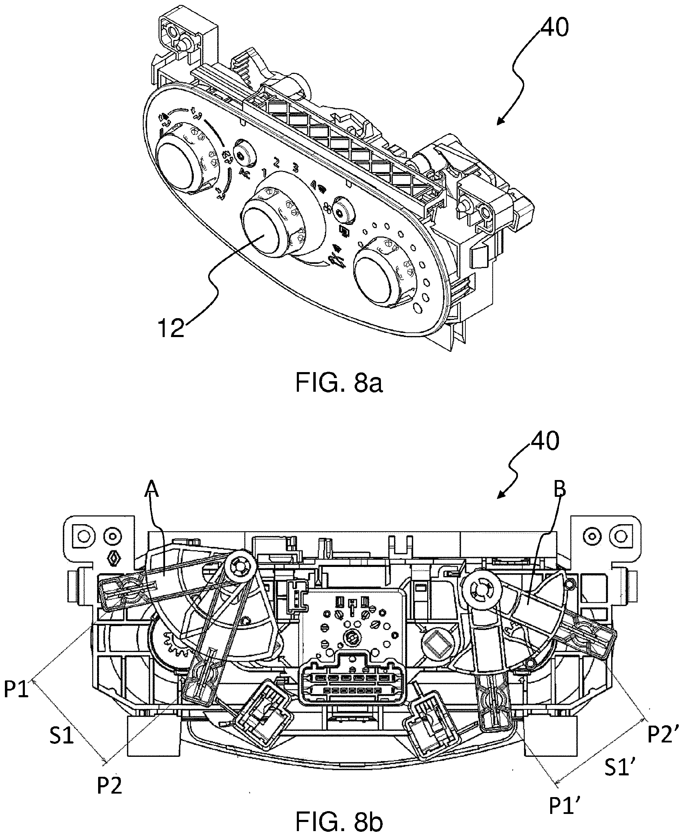

The present invention envisages an improved actuation system that reduces the tension in the actuating cable thereof, thereby obviating the problems associated with high tension in the actuating cable. The actuating system of the present invention considerably reduces the operating torque of the rotary knob used to control the flaps of the HVAC module through the actuating cable and the cam. FIG. 2 illustrates a schematic representation of at least a portion of an actuation system 100 in accordance with an embodiment of the present invention, wherein the actuation system 100 includes an actuating cable 10 and a cam 20. At least a portion of the actuating cable 10 is securely held within a sheath 10a that is guided by and moved through a cable guide 11. The actuating cable 10 is functionally coupled to a rotary knob 12 (refer FIG. 8a) disposed on a control panel 40 on one side thereof and the cam 20 on the other side thereof. The control panel 40 is generally disposed in the vehicle cabin and is accessible to the vehicle occupants, particularly, the vehicle occupants seated on driver and co-driver seats. The actuating cable 10 is connected to the rotary knob 12 via an actuating arm A. The actuating arm A being connected to the rotary knob 12 rotates therewith and the actuating cable 10 is connected to the actuating arm A through a fixing element 12a (refer FIG. 5 of the accompanying drawings). The rotary knob 12 is disposed downstream of the cable guide 11 in direction of movement of the actuating cable 10. The actuating cable 10 moves linearly through the cable guide 11 to exert pulling force on the cam 20 when the rotary knob 12 is actuated. More specifically, the rotary knob 12 configured on the control panel 40 is rotated to cause angular movement of the corresponding actuating arm A between a first position P1 and a second position P2. The actuating cable 10 includes the fixing element 12a at an extreme end thereof. The fixing element 12a of the actuating cable 10 configures connection between the actuating cable 10 and the actuating arm A. The actuating arm A, swivels between the first position P1 and the second position P2 to define stroke S1 of the actuating cable 10, particularly, the movement of the actuating cable 10 as the rotary knob 12 is rotated. Similarly, the control panel 40 may include a second rotary knob configured thereon that is rotated to cause angular movement of a corresponding actuating arm B between a first position P1' and a second position P2' to define stroke S1' of the actuating cable 10, particularly, the second rotary knob is rotated to cause movement of the actuating cable 10 connected to the actuating arm B via the corresponding fixing element 12b. In accordance with one embodiment of the present invention, at least one of the rotary knobs configured on the control panel 40 governs movement of a mixing flap responsible for mixing of hot air received from a heater and cold air received from an evaporator. Specifically, one end of the actuating cable is directly connected to the mixing flap via a lever and another end of the actuating cable is connected to the control knob for the mixing flap. However, the actuating cable actuated by the rotary knob for governing movement of the mixing flap can also be functionally coupled to the mixing flap via the cam as disclosed in the present invention instead of being directly connected thereto via the lever. FIG. 3 illustrates a schematic representation of at least a portion of the actuation system 100. Also is depicted an enlarged view of a fixation point, also referred to as a fixation arrangement 22 formed on the cam 20 to secure the actuating cable 10 to the cam 20. Particularly, in the enlarged view of FIG. 3, the actuating cable 10 is shown disengaged from the cam 20. FIG. 4 illustrates a schematic representation depicting another view of at least a portion of the actuation system 100.

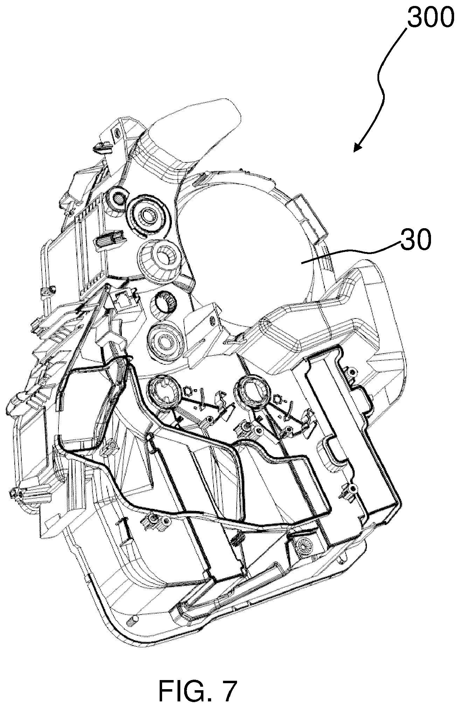

FIG. 5 illustrates a schematic representation of the actuating cable 10 of the actuation system 100 of the present invention. The cam 20 of the actuation system 100 of the present invention is mounted on a housing 310 and is capable of rotating about an axis of rotation "C" thereof. FIG. 6 illustrates the cam 20 of the actuation system 100 of the present invention. FIG. 7 illustrates a schematic representation of the housing 310 of a HVAC module 300. More specifically, the cam 20 rotates when the cam 20 is actuated by the pulling force exerted thereon by the actuating cable 10 connected thereto at the fixation point 22. As the cam 20 rotates, the cam 20 converts motion of the actuating cable 10 into angular movement of at least one flap 200 interacting with the cam 20, similar to the conventional actuating system 1 depicted in FIG. 1. The fixation point or the fixation point 22 is a ball and socket arrangement as illustrated in an enlarged view thereof depicted in FIG. 3. More specifically, the ball and socket arrangement includes a ball 14a connected to the actuating cable 10 and a socket 22a formed on the cam 20. The configuration of the ball 14a and the socket 22a is such that once the ball 14a is received in the socket 22a, the ball 14a is locked inside the socket 22a, thereby causing the actuating cable 10 to exert pulling force on the cam 20 upon being pulled by actuation of the rotary knob 12. The position of the ball and the socket can be reversed, wherein the ball could be mounted on the cam and the socket could be mounted on the actuating cable. The fixation point 22 is disposed proximal to a periphery of the cam 20. Preferably, the fixation arrangement is disposed at the periphery of the cam 20. In accordance with another embodiment of the present invention, the fixation point or fixation point 22 is formed on a portion extending radially outward of the cam 20. With such configuration, the fixation arrangement is disposed farthest from the axis of rotation "C" of the cam 20 while considering the packaging constrains, thereby generating large cam moment $M_{CAM}$ to cause rotation of the cam 20 with lesser pulling force $F_{CAB}$ of the actuating cable 10. However, the present invention is not limited to any particular configuration of the fixation point 22 or position of the fixation point on the cam 20, as long as the fixation point is capable of securing the actuating cable to the cam 20.

The actuating cable 10 is either a single wire or is formed by a plurality of wires stranded together to form a bundle of wires forming the actuating cable 10. The portion of the actuating cable 10 that is covered by the sheath 10a is guided by and through the cable guide 11, whereas the remaining section 10b of the actuating cable 10 proximal to the fixation point 22 is without the sheath 10a. However, the present invention is not limited to whether at least a portion of the actuating cable 10 is with the sheath 10a or not.

Apart from the cable guide 11, the actuating system 100 of the present invention includes an additional element in the form of an auxiliary guiding pin, hereinafter simply referred to as guiding pin 24 formed on the cam 20. The guiding pin 24 is disposed on the cam 20 and between the cable guide 11 and the fixation point 22 and above the actuating cable 10. More specifically, the guiding pin 24 formed on the cam 20 is disposed between the actuating cable 10 and the axis of rotation "C" of the cam 20. The guiding pin 24 further guides the actuating cable 10 and changes path of travel of the actuating cable 10 defined by the cable guide 11 such that the angle of pull α' subtended by the actuating cable 10 with the imaginary line connecting the axis of rotation of the cam "c" with the fixation point 22 is comparatively larger than the angle of pull α subtended by the actuating cable when there is no guiding pin in case of the conventional actuation system 1. The portion of the actuating cable 10 proximal to the fixation point 22 and coming in contact with the guiding pin 24 is generally without the sheath 10a. With such configuration, the guiding pin 24 presses the actuating cable 10 downwards to regulate the path of travel of the actuating cable 10 and in the process increases the angle of pull α', particularly, at the instance when the flap 200 is being actuated by the cam 20 functionally coupled to the flap 200. At the instance, when the cam 20 is actuating the flap 200, the guiding pin 24 presses the actuating cable 10 to decrease the tension therein by increasing the angle of pull α'. Once the cam 20 has actuated the flap 200, the guiding pin 24 loses contact with the actuating cable 10 and moves away from the actuating cable 10 along with the cam 20. Accordingly, the actuation system 100 of the present invention decreases the tension in the actuating cable 10 at the critical instance when the cam 20 is actuating the flap 200 and is subjected to high tensions. More specifically, the angle of pull α' subtended by the actuating cable 10 of the actuation system 100 of the present invention, illustrated in FIG. 2 of the accompanying drawings is comparatively larger than the angle of pull α subtended by the actuating cable 2 of the conventional actuating system 1, depicted in FIG. 1 of the accompanying drawings. The impact of increasing the angle of pull of the actuating cable 10 on the tension or force acting on the actuating cable 10, is explained in the below analysis,

$$F_{CAM} = M_{CAM} * R$$

$$F_{CAB} = F_{CAM} / Sine\ (\alpha')$$

$$f_{cab} = f_{cam} / Sine\ (\alpha)$$

$$F_{CAB} / f_{cab} = Sine\ (\alpha) / Sine\ (\alpha')$$

$$F_{CAB} = f_{cab} * Sine\ (\alpha) / Sine\ (\alpha')$$

where, $f_{cam}$ is the force acting on the cam,

$f_{cab}$ is the force acting on the cable in conventional actuating system without guiding pin,

$\alpha$ is the pulling angle subtended by the actuating cable,

in case of the conventional actuation system 1,

whereas, $F_{CAM}$ is the force acting on the cam,

$F_{CAB}$ is the force acting on the cable in actuating system of the present invention with the guiding pin 24,

$\alpha'$ is the pulling angle subtended by the actuating cable,

in case of the actuation system 100 of the present invention configured with the guiding pin 24.

Based on the above analysis, the tension or force $F_{CAB}$ acting on the actuating cable 10 of the actuation system 100 of the present invention is lesser compared to the force $f_{cab}$ acting of the actuating cable 2 of the conventional actuation system 1, due to the angle of the pull being increased from $\alpha$ to $\alpha'$. With reduction of the tension in the actuating cable 10 in case of the actuating system 100 of the present invention, the actuating torque required for actuating the flap via the actuating cable and the cam is reduced substantially. More specifically, by increasing the pulling angle from 49 to 57 (increase by 16 percent), the actuating torque for the rotary control knob 12 is decreased from 26.8 N-m to 18.1 N-m (decreased by 32 percent). However, the present invention is not limited to actuation system with guiding pin for increasing the angle of pull and reducing the tension in the actuating cable at the instance when the flap is being actuated by the cam by using the actuating cable and the guiding pin can increase the angle of pull at any instance, whenever required.

Referring to FIG. 2 of the accompanying drawings, the guiding pin 24 is depicted interacting with the actuating cable 10, wherein the guiding pin 24 interacts with the actuating cable 10 to change the path of travel of the actuating cable 10 resulting in increase in the angle of pull from $\alpha$ to $\alpha'$ and reduction in the tension in the actuating cable 10. FIG. 3 illustrates a schematic representation of at least a portion of the actuation system 100, wherein the guiding pin 24 is depicted about to interact with the actuating cable 10, also is depicted an enlarged view of the fixation point 22. Generally the guiding pin 24 is integrally formed with the cam 20. Alternatively, the guiding pin 24 is separate from the cam 20 and mounted thereon using threads, wherein complementary threads are formed on outer surface of the guiding pin 24 and inside walls of a hole formed on the cam 20. However, the present invention is not limited to any particular way of securing the guiding pin 24 to the cam 20 as far as the guiding pin 24 is securely mounted on the cam 20.
Preferably, the guiding pin 24 is of circular cross section. In accordance with an embodiment of the present invention, the guiding pin 24 is of uniform cross section along length thereof. Alternatively, the guiding pin 24 is of non-uniform cross section along length thereof. In accordance with one embodiment of the present invention, the guiding pin 24 is tapered radially inwards from a fixed end 24a to a free end 24b thereof. Generally, the guiding pin 24 is integrally formed with the cam 20 by moulding process, the guiding pin 24 is tapered from the fixed end 24a thereof to the free end 24b thereof to facilitate or simplify the demoulding, i.e. removal of the integrally formed cam 20 and the guiding pin 24 from the mould. In accordance with another embodiment, the guiding pin 24 is tapered radially outwards from the fixed end 24a to the free end 24b thereof. Generally, height of the guiding pin 24 is at least 5mm higher then height of the actuating cable 10 with respect to the cam 20. More specifically, the height of the guiding pin 24 is sufficiently higher than the height at which the actuating cable 10 moves with respect to the cam 20. Further, mean diameter of the guiding pin 24 is at least 4 times the diameter of the actuating cable 10. Preferably, the guiding pin 24 guides the actuating cable 10 to increase the pulling angle subtended by the actuating cable from $\alpha$ to $\alpha'$ and also limits contact and time of contact between the actuating cable 10 and the guiding pin 24. However, the present invention is not limited to any particular configuration of the guiding pin 24 as far as the guiding pin 24 is capable of guiding the actuating cable 10 to change travel path thereof to increase the angle of pull from $\alpha$ to $\alpha'$ to reduce the tension or force $F_{CAB}$ acting on the actuating cable 10 of the actuation system 100 of the present invention and reduce the contact time and contact between the actuating cable 10 and guiding pin 24. Specifically, the guiding pin 24 is so positioned on the cam 20 with respect to the fixation point 22 and the guiding pin 24 so interacts with the actuating cable 10, that the guiding pin 24 not only guides the actuating cable 10 to increase the pulling angle $\alpha'$ but also limits contact and time of contact and friction between the actuating cable 10 and the guiding pin 24. More specifically, actuating cable is tangent to the guiding pin 24 to minimize time of contact and friction between the guiding pin 24 and the actuating cable 10. Further, the guiding pin 24 is farthest from the fixation point 22 to prevent cable fracture. With such configuration, the wear and tear of the actuating cable 10 and the guiding pin 24 is reduced and service life of the actuating cable 10 and the guiding pin 24 is increased. Further, in accordance with one embodiment of the present invention, the guiding pin 24 includes a guiding groove receive the actuating cable and to regulate the movement of the actuating cable 10, thereby regulating the angle of pull $\alpha'$ of the actuating cable 10.
Although, the above description and the accompanying drawings explains the structure and function of the actuating system 100 of the present invention in accordance with a specific embodiment, wherein the actuating cable 10 is so arranged and connected to the fixation point 22 on the cam 20 that the cam 20 rotates in clock wise direction depicted by arrow X in FIG. 2 when the actuating cable 10 exerts pulling force on the cam 20. However, the actuating system of the present invention can operate and achieve the same advantageous effect of reducing the forces or tension acting on the actuating cable 10 and reducing contact and time of contact between the actuating cable 10 and the guiding pin 24 if the actuating cable 10 is so arranged and connected to the fixation point on the cam 20 that the cam 20 rotates in anti-clock wise direction depicted by arrow Y in FIG. 2 when the actuating cable 10 exerts pulling force on the cam 20. In that case also the guiding pin 24 is disposed between the rotary knob 12 and the fixation point 22 but is disposed below the actuating cable 10. More specifically, the guiding pin 24 lifts the actuating cable 10 instead of pressing the actuating cable 10 to regulate the path of travel of the actuating cable 10 and in the process increase the angle of pull α'.

Also is disclosed the HVAC module 300 in accordance with an embodiment of the present invention, the HVAC module 300 includes at least one flap 200 that is actuated by the actuation system 100 as disclosed above. The HVAC module includes a HVAC

## Claims

1. An actuation system (100) for actuating at least one flap (200) of a HVAC module (300), the actuation system (100) comprising:

   - an actuating cable (10), at least a portion of the actuating cable (10) securely held within a sheath (10a) that is guided by and moved through a cable guide (11) to exert pulling force by the actuating cable (10); and
   - a cam (20) mounted on a housing (310) and actuated by the pulling force exerted by the actuating cable (10) connected thereto at a fixation point (22) and adapted to rotate and convert motion of the actuating cable (10) into angular movement of at least one flap (200) interacting with the cam (20),

   **characterized in that** the cam (20) comprises an auxiliary guiding pin (24) disposed thereon between the cable guide (11) and the fixation point (22) and above the actuating cable (10).

2. The actuation system (100) as claimed in the previous claim, wherein the actuating cable (10) is functionally coupled to a rotary knob (12) disposed on a vehicle control panel (40) and downstream of the cable guide (11) in direction of movement of the actuating cable (10), the actuating cable (10) being adapted to exert pulling force upon actuation of the rotary knob (12).

3. The actuation system (100) as claimed in any of the preceding claims, wherein the remaining section (10b) of the actuating cable (10) coming in contact with the auxiliary guiding pin (24) is without the sheath (10a).

4. The actuating system (100) as claimed in any of the preceding claims, wherein the actuating cable (10) is of a single wire.

5. The actuation system (100) as claimed in any of the preceding claims, wherein the fixation point is a ball and socket arrangement.

6. The actuation system (100) as claimed in any of the preceding claims, wherein the fixation point (22) is disposed proximal to a periphery of the cam (20).

7. The actuation system (100) as claimed in the previous claim, wherein the auxiliary guiding pin (24) is integrally formed with the cam (20) by moulding process.

8. The actuation system (100) as claimed in any of the preceding claims, wherein the auxiliary guiding pin (24) is of non-uniform cross section along length thereof.

9. The actuation system (100) as claimed in the previous claim, wherein the auxiliary guiding pin (24) is tapered radially inwards from a fixed end (24a) to a free end (24b) thereof.

10. The actuation system (100) as claimed in any of the preceding claims, wherein the auxiliary guiding pin (24) is arranged on the cam (20) between the actuating cable (10) and the axis of rotation "C" of the cam (20).

11. The actuation system (100) as claimed in any of the preceding claims, wherein height of the auxiliary guiding pin (24) is at least 5mm higher than height of the actuating cable (10) with respect to the cam (20).

12. The actuation system (100) as claimed in any of the preceding claims, wherein mean diameter of the auxiliary guiding pin (24) is at least 4 times the diameter of the actuating cable (10).

13. The actuation system (100) as claimed in any of the preceding claims, wherein the auxiliary guiding pin (24) is adapted to guide the actuating cable (10) to increase a pulling angle to (α') and limit contact and time of contact between the actuating cable (10) and the auxiliary guiding pin (24) at the instance when the flap (200) is being actuated by the cam (20).

14. The actuation system (100) as claimed in claim 2, wherein the actuating cable (10) is connected to the rotary knob (12) via an actuating arm A, the actuating arm A being connected to the rotary knob (12) adapted to rotate therewith and the actuating cable (10) is connected to the actuating arm A through a fixing element (12a).

15. A HVAC module (300) comprising at least one flap (200) that is actuated by the actuation system (100) as claimed in any of the preceding claims.

FIG. 1

(PRIOR ART)

FIG. 2

FIG. 3

FIG. 4

10

11  10b

10a

14a

12a, 12b

## FIG. 5

20

22a

24

24a

24b

## FIG. 6

FIG. 7

40

12

FIG. 8a

40

A          B

P1

S1

P2          P2'

S1'

P1'

FIG. 8b

Europäisches
Patentamt

European
Patent Office

Office européen
des brevets

# EUROPEAN SEARCH REPORT

Application Number

EP 21 16 7769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 283 692 A (HANS FROITZHEIM) 8 November 1966 (1966-11-08) * column 2, line 33 - column 3, line 72; figures 1-5 * | 1-15 | INV. B60H1/00 |
| X | KR 2012 0001271 A (DOOWON CLIMATE CONTROL CO LTD [KR]) 4 January 2012 (2012-01-04) * paragraphs [0002] - [0007]; figure 1 * | 1-15 | |
| A | JP 2001 347824 A (DENSO CORP) 18 December 2001 (2001-12-18) * paragraphs [0017] - [0057]; figures 1-7 * | 1-15 | |

|  |  |
|---|---|
|  | TECHNICAL FIELDS SEARCHED (IPC) |
|  | B60H |

The present search report has been drawn up for all claims

| Place of search | Date of completion of the search | Examiner |
|---|---|---|
| Munich | 22 September 2021 | Flori, Massimiliano |

EPO FORM 1503 03.82 (P04C01)

## ANNEX TO THE EUROPEAN SEARCH REPORT
## ON EUROPEAN PATENT APPLICATION NO.

EP 21 16 7769

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2021

| Patent document cited in search report | | Publication date | Patent family member(s) | | Publication date |
|---|---|---|---|---|---|
| US 3283692 | A | 08-11-1966 | CH<br>FR<br>US | 429473 A<br>1406318 A<br>3283692 A | 31-01-1967<br>16-07-1965<br>08-11-1966 |
| KR 20120001271 | A | 04-01-2012 | NONE | | |
| JP 2001347824 | A | 18-12-2001 | NONE | | |

For more details about this annex : see Official Journal of the European Patent Office, No. 12/82